# EUROPÄISCHE PATENTSCHRIFT

(11) **EP 1 640 096 B1**
(45) Veröffentlichungstag und Bekanntmachung des Hinweises auf die Patenterteilung: **09.03.2011**
(21) Anmeldenummer: 05017687.4
(22) Anmeldetag: 13.08.2005
(51) Int. Cl.: B23H 3/00, B23H 3/06

(54) **Verfahren zur elektrochemischen Bearbeitung eines Werkstücks**
Method for electrochemical machining of a workpiece
Méthode pour usiner une pièce par électrochimie.

(30) Priorität: 19.08.2004 DE 102004040216
(43) Veröffentlichungstag der Anmeldung: 29.03.2006
(73) Patentinhaber: MTU Aero Engines GmbH, 80995 München (DE); Dorner GmbH, 74404 Gaildorf (DE)
(72) Erfinder: Bayer, Erwin, 85221 Dachau (DE); Bussmann, Martin, 85247 Schwabhausen (DE); Geiger, Harald, 74405 Gaildorf (DE); Kränzler, Thomas, 88682 Salem (DE); Laun, Jochen, 74405 Gaildorf (DE); Platz, Albin, 86510 Ried-Baindlkirch (DE); Rothammel, Walter, 74594 Kressberg/Bergbronn (DE); Steinwandel, Jürgen, 88690 Uhldingen-Mühlhofen (DE); Ströer, Martin, 88090 Immenstaad (DE)
(74) Vertreter: Söllner, Oliver

(56) Entgegenhaltungen:
- DE-A1- 1 933 455
- US-A- 3 041 265
- US-A- 3 202 595
- US-A- 3 271 281
- US-A- 4 522 692

## Beschreibung

Die Erfindung betrifft ein Verfahren zur elektrochemischen Bearbeitung eines Werkstücks nach dem Oberbegriff das Anspruchs 1, Wie aus der US-A-3,202,595 bekannt ist.

Elektroden zur elektrochemischen Bearbeitung eines Werkstücks sind in einer großen Vielzahl bekannt. So beschreibt die US-A-4 522 692 eine Elektrode der eingangs genannten Art. Dabei ist die Elektrode aus mehreren Elementen aufgebaut, nämlich einem Elektrodenkörper und einer porösen Elektrodenspitze beziehungsweise einem porösen Elektrodenende. Die Elektrodenspitze beziehungsweise das Elektrodenende besteht dabei aus einem gesinterten Metallpulver. Nachteilig an den bekannten Elektroden ist jedoch, dass diese nicht in Lage sind einen gleichmäßigen Elektrolytfluss oder einen gleichmäßigen und genügenden Elektrolytaustausch zu gewährleisten.

Als weitere Gestaltungen, bei denen die Elektrode porös ausgestaltet ist, sind der US-A-3,041,265, der US-A-3,271,281 sowie der DE 1 933 455 A1 bekannt.

Des Weiteren sind Verfahren zur elektrochemischen Bearbeitung eines Werkstücks mit einer Elektrode bekannt. So stellt zum Beispiel das sogenannte elektrochemische Senken ein Verfahren zum exakten und sehr präzisen Bearbeiten von Oberflächen dar. Beim elektrochemischen Senken wird in der Regel mit einer Elektrode die Oberfläche des Werkstückes bearbeitet wobei durch elektrochemische Reaktion des Werkstückes mit dem sich zwischen dem Werkstück und der Elektrode befindlichen Elektrolyt ein Abtragen von Material am Werkstück erfolgt. Bei üblichen Vorgängen des elektrochemischen Senkens wird mit Abständen von der Elektrode zum Werkstück gearbeitet die im Bereich von 1 bis 2 mm liegen können. Zum Erzeugen feinerer Strukturen und Formen kann der Abstand auf Größen im Bereich von 10 bis 50 µm und darunter abgesenkt werden (Präzises Elektrochemisches Senken). Bei einem derartigen präzisen elektrochemischen Senken kann ein Austausch des Elektrolyten nur durch die Vibration der Elektrode und entsprechend hohen Elektrolytdrucken im Spalt zwischen Elektrode und Werkstück gewährleistet werden. Dabei besteht aber insbesondere bei dünnwandigen Werkstücken die Gefahr, dass diese beschädigt und insbesondere verbogen werden. Des Weiteren wird während des Öffnens des Spaltes mittels Vibration der Stromfluss unterbrochen um einen unkontrolliert streuenden Abtrag zu verhindern. Dies führt zu einer Minderung der Abtragungsrate.

Es ist Aufgabe der vorliegenden Erfindung ein Verfahren zur elektrochemischen Bearbeitung eines Werkstücks mit einer Elektrode bereit zu stellen, bei denen ein gleichmäßiger Elektrolytfluss und ein gleichmäßiger und genügender Elektrolytaustausch in einem Bereich zwischen der Elektrode und einem zu bearbeitenden Werkstück sowie hohe Abtragungsraten gewährleistet.

Die Erfindung wird durch die Merkmale das Anspruchs 1 gelöst.

Vorteilhafte Ausgestaltungen sind in den jeweiligen Unteransprüchen beschrieben.

Eine Elektrode zur elektrochemischen Bearbeitung eines Werkstücks weist Wegsamkeiten auf, die durch eine poröse Ausbildung der Elektrode und/oder durch künstlich geschaffene Öffnungen in der Elektrode bzw. der Elektrodenoberfläche ausgebildet werden. Des Weiteren ist die Porositätsverteilung und/oder die Anzahl, die Anordnung und die Ausgestaltung der Öffnungen derart gewählt, dass ein gleichmäßiger Elektrolytfluss und/oder Elektrolytaustausch an der Elektrodenoberfläche zumindest in einem Arbeitsbereich der Elektrode gewährleistet ist. Insbesondere ist es auch vorgesehen, dass die Porositätsverteilung und/oder die Anzahl, die Anordnung und die Ausgestaltung der Öffnungen derart gewählt ist, dass ein gleichmäßiger Elektrolytfluss und/oder Elektrolytaustausch an der gesamten Elektrodenoberfläche gewährleistet ist. Durch das vorteilhafte Einbringen einer definierten Porositätsverteilung oder eines entsprechenden Musters an Öffnungen kann bei engen Spalten beim präzisen elektrochemischen Senken ein erzwungener, gleichmäßiger Elektrolytfluss und ein genügend großer Elektrolythaustausch eingestellt werden, der zu einem optimalen Abtrag führt. Dabei kann im Vergleich zu einer Arbeitsweise mit vibrierender bzw. pulsierender Elektrode beim präzisen elektrochemischen Senken das Pulsieren bzw. Vibrieren der erfindungsgemäßen Elektrode deutlich reduziert werden oder zum Teil völlig darauf verzichtet werden. Dadurch erhöht sich bei gleicher Bearbeitungsqualität die Einschaltdauer des Arbeitsstroms, so dass die Abtragungsrate deutlich erhöht, insbesondere mehr als verdoppelt wird.

Eine Elektrode kann weisen die Elektrodenoberfläche Bereiche unterschiedlicher Porositäten auf. Es ist auch möglich, dass die Öffnungen gleiche oder unterschiedliche Durchmesser aufweisen und/oder gleich oder unterschiedlich tief ausgebildet sind. Durch das Einbringen einer definierten, unterschiedlichen Porosität und/oder eines definierten Musters an Öffnungen, wie z. B. Bohrungen, unterschiedlicher Anzahl, Größe und Tiefe kann auch beim präzisen elektrochemischen Senken ein erzwungener, gleichmäßiger Elektrolytfluss eingestellt werden. Dies führt wiederum zu einem optimalen Abtrag bei optimalen Oberflächeneigenschaften des zu bearbeitenden Werkstücks.

Die Elektrode kann aus Graphit, aus Metall oder einer Metall-Legierung, vorzugsweise einer Wolfram-Kupfer-Legierung bestehen.

Ein erfindungsgemäßes Verfahren nach Anspruch 1 zeichnet sich dadurch aus, dass während der Absenkung der Elektrode in Richtung des zu bearbeitenden Werkstücks mindestens eine Mikrobewegung der Elektrode quer zur Senkrichtung der Elektrode durchgeführt wird. Durch die Verwendung der im vorhergehenden beschriebenen Elektrode sowie die Durchführung einer Mikrobewegung der Elektrode quer zur Senkrichtung der Elektrode wird einerseits bei engen Spalten ein erzwungener, gleichmäßiger Elektrolytfluss und Elektrolytaustausch sichergestellt und andererseits verhindert, dass sich die Porosität der Elektrode, insbesondere die Porosität der Elektrode im Bereich des Arbeitsbereichs auf das zu bearbeitende Werkstück abbildet. Vorteilhafterweise erfolgt die Mikrobewegung mit einer Amplitude, die in etwa der Porengröße oder dem Durchmesser der Öffnungen entspricht.

Erfindungsgemäß werden durch die Ausgestaltung der Wegsamkeiten in der Elektrode Bereiche mit unterschiedlichen Druckgradienten ausgebildet. So können u. a. weiter unterschiedliche Druckgradiente durch unterschiedliche Wanddicken der Elektrode ausgebildet werden. Erfindungsgemäß werden weiter unterschiedlicher Druckgradienten durch voneinander getrennt ausgebildete Versorgungsdrücke erzeugt. Durch die vordefinierte und eingestellte Druckverteilung kann auch bei engen Spalten bei einem präzisen elektrochemischen Senken ein gleichmäßiger Elektrolytfluss oder Elektrolytaustausch hergestellt werden. Die Porositätsverteilung und/oder die Anzahl, die Anordnung und die Ausgestaltung der Öffnungen und/oder die Verteilung der Druckgradienten in der Elektrode wird vorteilhafterweise durch eine Computersimulation vorab ermittelt. Dadurch ist es möglich, einen optimalen gleichmäßigen Elektrolytfluss und Elektrolytaustausch auf die jeweilige Geometrie der Elektrode bzw. Werkzeugelektrode abzustimmen.

In einem weiteren erfindungsgemäßen Verfahren zur elektrochemischen Bearbeitung eines Werkstücks mittels eines elektrochemischen Senkverfahrens mit einer Elektrode wie im Vorhergehenden beschrieben wird während der Absenkung der Elektrode in Richtung des zu bearbeitenden Werkstücks mindestens eine Kippbewegung der Elektrode quer zur Senkrichtung der Elektrode durchgeführt. Dadurch ist es neben dem Erzielen eines gleichmäßigen Elektrolytflusses und Elektrolytaustausches möglich, den Elektrolyt schneller und größere Elektrolytmengen auszutauschen, so dass auch große Flächen von Werkstücken ohne Probleme bearbeitet werden können.

Bei einem weiteren erfindungsgemäßen Verfahren zur elektrochemischen Bearbeitung eines Werkstücks mittels eines elektrochemischen Senkverfahrens mit einer Elektrode wie im Vorhergehenden beschrieben werden zwei sich gegenüberliegende Elektroden verwendet, die auf das zu bearbeitende Werkstück abgesenkt werden, wobei sich das Werkstück zwischen den Elektroden befindet. Zu dem erzwungenen, gleichmäßigen Elektrolytfluss und dem genügend großen Elektrolythaustausch kann durch dieses Verfahren eine Kompensation des Elektrolytdrucks erreicht werden, so dass eine elastische Verbindung des zu bearbeitenden Werkstücks zuverlässig verhindert wird. Die zwei sich gegenüberliegenden Elektroden können dabei jeweils in einem vordefinierten Winkel auf das zu bearbeitende Werkstück abgesenkt werden, so dass Werkstücke mit unterschiedlicher Geometrie an Ober- und Unterseite gleichzeitig bearbeitet werden können. Die Neigungswinkel der Elektroden können dabei zwischen 5° und 75° relativ zu den Bearbeitungsoberflächen betragen.

In einer weiteren vorteilhaften Ausgestaltung der erfindungsgemäßen Verfahren wird der Elektrolyt pulsförmig zugegeben. Dadurch ist eine exakte Dosierung der benötigten Elektrolytmenge möglich.

Verwendung findet die Elektrode unter anderem bei einem elektrochemischen Senkverfahren mit einer Spaltbreite zwischen der Elektrode und dem zu bearbeitenden Werkstück von kleiner als 250 µm. Weiterhin findet die erfindungsgemäße Elektrode Verwendung bei der Herstellung von Triebwerksbauteilen aus Nickel- oder Titanbasislegierungen, insbesondere zur Herstellung von Schaufelprofilen.

## Patentansprüche

1. Verfahren zur elektrochemischen Bearbeitung eines Werkstücks mittels eines elektrochemischen Senkverfahrens mit einer Elektrode zur elektrochemischen Bearbeitung eines Werkstücks, wobei die Elektrode als kathodisch gepolte Werkzeugelektrode ausgebildet ist und zumindest in einem Arbeitsbereich eine Geometrie aufweist, die der abzutragenden Geometrie auf dem Werkstück entspricht und Wegsamkeiten in der Elektrode zum Durchfluss und Austritt eines Elektrolyten an der Elektrodenoberfläche zumindest im Bereich des Arbeitsbereichs aufweist, wobei die Wegsamkeiten durch eine poröse Ausbildung der Elektrode und/oder durch künstlich geschaffene Öffnungen in der Elektrode beziehungsweise der Elektrodenoberfläche ausgebildet werden und die Porositätsverteilung und/oder die Anzahl, die Anordnung und die Ausgestaltung der Öffnungen derart gewählt ist, dass ein gleichmäßiger Elektrolytfluss und/oder Elektrolytaustausch an der Elektrodenoberfläche zumindest in dem Arbeitsbereich der Elektrode gewährleistet ist, **dadurch gekennzeichnet, dass** während der Absenkung der Elektrode in Richtung des zu bearbeitenden Werkstücks mindestens eine Mikrobewegung der Elektrode quer zur Senkrichtung der Elektroden durchgeführt wird, wobei durch die Ausgestaltung der Wegsamkeiten in der Elektrode Bereiche mit unterschiedlichen Druckgradienten ausgebildet sind, wobei, weiter unterschiedliche Druckgradienten durch voneinander getrennt ausgebildete Versorgungsdrücke erzeugt werden mindestens eine Kippbewegung der Elektrode quer zur Senkrichtung der Elektrode durchgeführt wird.

2. Verfahren zur elektrochemischen Bearbeitung gemäss Anspruch 1, **dadurch gekennzeichnet, dass** die zwei sich gegenüberliegende Elektroden jeweils in einem vordefinierten Winkel auf das zu bearbeitende Werkstück abgesenkt werden.

3. Verfahren nach einem der Ansprüche 1 bis 2, **dadurch gekennzeichnet, dass** der Elektrolyt pulsförmig zugegeben wird.

4. Verfahren nach einem der Ansprüche 1 bis 2, **dadurch gekennzeichnet, dass** die Porositätsverteilung und/oder die Anzahl, die Anordnung und die Ausgestaltung der Öffnungen derart gewählt ist, dass ein gleichmässiger Elektrolytfluss und/oder Elektrolytaustausch an der gesamten Elektrodenoberfläche gewährleistet ist. 2

5. Verfahren nach einem der Ansprüche 1 bis 2, **dadurch gekennzeichnet, dass** die Elektrodenoberfläche Bereiche unterschiedlicher Porositäten aufweist.

6. Verfahren nach einem der Ansprüche 1 bis 2, **dadurch gekennzeichnet, dass** die Öffnungen gleiche oder unterschiedliche Durchmesser aufweisen.

7. Verfahren nach einem der Ansprüche 1 bis 2, **dadurch gekennzeichnet, dass** die Öffnungen gleich oder unterschiedlich tief ausgebildet sind.

8. Verfahren nach Anspruch 1, **dadurch gekennzeichnet, dass** weiter unterschiedliche Druckgradienten durch unterschiedliche Wanddicken der Elektrode ausgebildet sind.

9. Verfahren nach einem der Ansprüche 1 bis 2, **dadurch gekennzeichnet, dass** die Elektrode aus Graphit, aus Metall oder einer Metall-Legierung, vorzugsweise einer Wolfram-Kupfer-Legierung besteht.

## Claims

1. Method for electrochemically processing a workpiece by means of an electrochemical machining process with an electrode for electrochemically processing a workpiece, wherein the electrode is formed as a cathodically polarized tool electrode and at least in one working region has a geometry that corresponds to the geometry to be removed on the workpiece and has instances of penetratability in the electrode for the through-flow and exit of an electrolyte at the electrode surface at least in the region of the working region, wherein the instances of penetratability are formed through a porous formation of the electrode and/or through artificially created openings in the electrode or the electrode surface respectively, and the porosity-distribution and/or the number, the arrangement and the configuration of the openings are/is selected in such a way that a uniform electrolyte-flow and/or electrolyte-exchange are/is guaranteed at the electrode surface at least in the working region of the electrode, **characterised in that** during the lowering of the electrode in the direction of the workpiece that is to be processed at least one micro-movement of the electrode is effected transversely to the machining direction of the electrode, wherein, as a result of the configuration of the instances of penetratability in the electrode, regions with differing pressure gradients are formed, wherein, furthermore, differing pressure gradients are produced by means of supply pressures that are formed separately from each other.

2. Method for electrochemically processing according to claim 1, **characterised in that** the two opposing electrodes are in each case lowered at a predefined angle onto the workpiece that is to be processed.

3. Method according to one of claims 1 to 2, **characterised in that** the electrolyte is added in a pulsed manner.

4. Method according to one of claims 1 to 2, **characterised in that** the porosity-distribution and/or the number, the arrangement and the configuration of the openings are/is selected in such a way that a uniform electrolyte-flow and/or electrolyte-exchange are/is guaranteed over the whole electrode surface.

5. Method according to one of claims 1 to 2, **characterised in that** the electrode surface has regions of differing porosity.

6. Method according to one of claims 1 to 2, **characterised in that** the openings have the same or differing diameters.

7. Method according to one of claims 1 to 2, **characterised in that** the openings are formed with the same or differing depth.

8. Method according to claim 1, **characterised in that**, furthermore, differing pressure gradients are formed by means of differing wall thicknesses of the electrode.

9. Method according to one of claims 1 to 2, **characterised in that** the electrode consists of graphite, of metal or a metal alloy, preferably of a tungsten-copper-alloy.

## Revendications

1. Procédé d'usinage électrochimique d'une pièce au moyen d'un procédé de chanfreinage électrochimique avec une électrode pour l'usinage électrochimique d'une pièce, ladite électrode étant constituée d'une électrode-outil à polarisation cathodique et présentant au moins dans une zone de travail une géométrie qui correspond à la géométrie à usiner sur la pièce et qui comporte des voies de circulation dans l'électrode pour l'écoulement et la sortie d'un électrolyte sur la surface d'électrode au moins au niveau de la zone de travail, les voies de circulation étant formées par une réalisation poreuse de l'électrode et/ou par des orifices créés artificiellement dans l'électrode ou sur la surface d'électrode, et la distribution des pores et/ou le nombre, l'agencement et la conformation des orifices étant choisis de manière à assurer un écoulement et/ou un renouvellement uniforme de l'électrolyte à la surface de l'électrode au moins dans la zone de travail de l'électrode, **caractérisé en ce que**, pendant la descente de l'électrode en direction de la pièce à usiner, au moins un micro-déplacement est effectué par l'électrode transversalement à la direction de descente de l'électrode, des zones à gradients de pression différenciés étant réalisées dans l'électrode par la conformation des voies de circulation, des gradients de pression différenciés étant en outre générés par des pressions d'alimentation prévues séparément l'une de l'autre.

2. Procédé d'usinage électrochimique selon la revendication 1, **caractérisé en ce que** les deux électrodes opposées sont descendues chacune suivant un angle défini sur la pièce à usiner.

3. Procédé selon l'une des revendications 1 ou 2, **caractérisé en ce que** l'électrolyte est ajouté par impulsions.

4. Procédé selon l'une des revendications 1 ou 2, **caractérisé en ce que** la distribution des pores et/ou le nombre, l'agencement et la conformation des orifices sont choisis de manière à assurer un écoulement et/ou un renouvellement uniforme de l'électrolyte sur toute la surface de l'électrode.

5. Procédé selon l'une des revendications 1 ou 2, **caractérisé en ce que** la surface de l'électrode présente des zones de porosités différenciées.

6. Procédé selon l'une des revendications 1 ou 2, **caractérisé en ce que** les orifices sont de diamètres égaux ou différents.

7. Procédé selon l'une des revendications 1 ou 2, **caractérisé en ce que** les orifices sont réalisés avec des profondeurs égales ou différentes.

8. Procédé selon la revendication 1, **caractérisé en ce que** des gradients de pression différenciés sont en outre réalisés par différentes épaisseurs de paroi de l'électrode.

9. Procédé selon l'une des revendications 1 ou 2, **caractérisé en ce que** l'électrode est en graphite, en métal ou en alliage métallique, de préférence un alliage tungstène-cuivre.
